# EUROPÄISCHE PATENTSCHRIFT

(11) **EP 3 988 256 B1**
(45) Veröffentlichungstag und Bekanntmachung des Hinweises auf die Patenterteilung: **29.11.2023**
(21) Anmeldenummer: 21192865.0
(22) Anmeldetag: 24.08.2021
(51) Int. Cl.: B25J 9/16, F16P 3/14, F16P 3/16

(54) **ABSICHERN EINES BEWEGLICHEN MASCHINENTEILS**
SECURING OF A MOVABLE PART OF A MACHINE
FIXATION D'UNE PIÈCE DE MACHINE MOBILE

(30) Priorität: 21.10.2020 DE 102020127670
(43) Veröffentlichungstag der Anmeldung: 27.04.2022
(73) Patentinhaber: SICK AG, 79183 Waldkirch (DE)
(72) Erfinder: Hofmann, Dr. Christoph, 79108 Freiburg (DE); Reichert, Silja, 79194 Gundelfingen (DE); Pokrandt, Peter, 76474 Au am Rhein (DE)

(56) Entgegenhaltungen:
- EP-A1- 3 136 127
- DE-A1-102018 118 265
- DE-A1-102019 110 882

## Beschreibung

Die Erfindung betrifft ein Verfahren zum Absichern eines beweglichen Maschinenteils einer Maschine, insbesondere eines Roboters, sowie ein Absicherungssystem nach dem Oberbegriff von Anspruch beziehungsweise 11.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanförderungen erfüllen, beispielsweise die Norm E N 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotem, besteht ein zunehmender Wunsch nach engerer Zusammenarbeit mit Personen (MRK, Mensch-Roboter-Kollaboration) auch in komplexen Umgebungen. Relevante Normen in diesem Zusammenhang sind beispielsweise die ISO 10218 für Industrieroboter oder die ISO 15066 für kollaborierende Roboter. Ähnliche Problemstellungen ergeben sich für andere Maschinen als Roboter, beispielsweise AGVs/AGCs (Automated Guided Vehicle/Container) oder Drohnen.

Für solche kooperativen Anwendungen sind bisherige Sicherheitskonzepte durch Zäune und Absperrungen ausgeschlossen. Aber auch die Absicherung durch herkömmliche Sicherheitssensoren, wie Laserscanner, Lichtgitter oder Sicheitieitskameras, eignet sich vorrangig für große, freie Überwachungsbereiche mit einfacher Geometrie.

Bei Robotern begrenzt ein herkömmlicher Ansatz die Kraft derart, dass auch eine Kollision nicht zu ernsthaften Verletzungen führen kann Zudem wird beim Design der mechanischen Roboterkomponenten bewusst auf kantenfreie, runde oder weiche Außenkonturen geachtet. Dabei bleiben jedoch Gefahrenquellen am Werkzeug selbst, das spitze, rotierende oder heiße Teile aufweisen kann. Außerdem verhindern die mechanischen Maßnahmen und Kraftbegrenzungen keine Quetschungen etwa der Hand zwischen Werkzeug und einer Halterung oder dergleichen auf einer Arbeitsfläche.

Hier besteht nun grundsätzlich die Möglichkeit, einen kleinen, leichten Distanzsensor beziehungsweise eine Mehrfachanordnung solcher Distanzsensoren mit dem Werkzeug am Roboterarm mitzubewegen. Mit einem entsprechenden Distanzsensor befasst sich die DE 10 2015 112 656 A1. Damit wird eine Art virtuelle Schutzglocke oder virtueller Schutzmantel um das Werkzeug überwacht und der Roboter bei Eindringen eines sicherheitsrelevanten Objekts gebremst oder angehalten. Der Distanzsensor ist jedenfalls im Verbund mit der übergeordneten Steuerung sicher ausgelegt, und zum Erreichen eines höheren Sicherheitsniveaus sind Tests in Form einer Referenzfahrt bei bekannten Referenzzielen möglich. Die offenbarte Schutzglocke ist aber für die Überwachung kurz vor dem eigentlichen Arbeitsschritt mit Greifen oder Bearbeiten eines Werkstücks nicht ausgelegt. Die Sicherheitsfunktion würde unweigerlich durch das Werkstück selbst und dessen Umgebung ausgelöst. Außerdem darf bei dieser herkömmlichen Realisierung eine Arbeitsfläche nur lotrecht angefahren werden. Ansonsten ist nicht gewährleistet, dass der Schutzmantel jederzeit hinreichend geschlossen ist.

Die EP 3 136 127 A1 befasst sich mit modularen und konstruktiven Ausgestaltungen, etwa der Verwendung von Einzelphotonenlawniendioden. Es wird die Möglichkeit erwähnt, den Schutzbereich in seiner Tiefe an Werkzeugbewegungen und Werkstückgeometrie dynamisch anzupassen und bei Annäherung von oben an das Werkstück einen Schwellwert für die Auslösung der Sicherheitsfunktion entsprechend der abnehmenden Entfernung zu reduzieren.

Die nachveröffentlichte DE 10 2019 110 882 A1 offenbart ein Verfahren zum Absichern eines beweglichen Maschinenteils mit mindestens einem Distanzsensor entsprechend der DE 10 2015 112 656 A1. Dabei werden Abstandsschwellen und damit die Ausdehnung der virtuellen Schutzglocke während einer Annäherungsbewegung an eine Arbeitsoberfläche oder ein Werkstück angepasst. Dazu müssen jedoch Umschaltpunkte, in denen eine jeweilige Annäherungsbewegung einsetzt, sowie die sich verändernden Abstandsschwellen während der Annäherungsbewegung in einem aufwändigen Verfahren eingelernt werden. Das ist auch nur für eine endliche Anzahl, Umschaltpunkte möglich. Ändert sich die Arbeitsumgebung, so muss das Einlernverfahren wiederholt oder wenigstens erweitert werden.

Mit einer anderen Erweiterung der DE 10 2015 112 656 A1 befasst sich die nachveröffentlichte EP 3 744 482 A1. Dabei wird nicht nur mittels Abstandsschwellen die Länge oder Höhe der virtuellen Schutzglocke angepasst, sondern auch die Ausrichtung der schützenden Strahlen mindestens eines Distanzsensors und damit die Form, insbesondere Öffnungswinkel und/oder Durchmesser der Schutzglocke verändert. Das schafft mehr Freiheitsgrade, ändert aber nichts an den genannten Nachteilen eines aufwändigen Einlemens, mangelnder Flexibilität nach dem Einlemen und der nur lotrecht möglichen Annäherungsbewegung an eine Arbeitsoberfläche.

Die DE 10 2018 118 265 A1 offenbart ein Verfahren und ein Überwachungssystem zum Absichern einer Maschine, bei dem in einer Einlemphase mit einem abstandsmessenden Sensor die Umgebung eines Roboters erfasst und daraus eine Referenzkarte gewonnen wird. In einer Betriebsphase wird die von dem Sensor erfasste Umgebung mit der Referenzkarte verglichen und durch eine Sicherheitsbewertung von Abweichungen entschieden, ob eine sicherheitsgerichtete Reaktion eingeleitet werden muss.

Aus der DE 10 2018 113 362 A1 ist bekannt, ein Kamera modul in ein Sensorsystem mit optoelektronischen Distanzsensormodulen zur Überwachung eines Gefahrenbereichs an einem beweglichen Maschinenteil zu integrieren. Das Kameramodul ist jedoch an der Sicherheitsfunktion nicht beteiligt, sondern stellt eine optionale Unterstützung für Automatisierungsfunktionen dar.

Die EP 2 339 376 A1 offenbart einen Laserscanner an einem autonomen Fahrzeug in einem Hochregallager, der seine Schutzfelder je nach Ausrichtung des Fahrzeugs zu den seitlichen Begrenzungen anpasst- Diese Anpassung basiert auf Messdaten des Laserscanners selbst. Ein Laserscanner ist für die Anbringung an der Spitze eines Roboterarms nicht kompakt und leicht genug, und die spezielle Anpassung von Schutzfeldern an seitliche Hochregale würde an einem Roboterarm auch nicht funktionieren.

In der EP 3 533 568 A1 wird ein Robotersystem vorgestellt, bei dem ein erster beispielsweise kapazitiver Sensor sehr nahe oder berührende Objekte erkennt. Ein zweiter Sensor, der ein optischer Sensor nach einem Lichtlaufzeitprinzip sein kann, erfasst Objekte in einem größeren Überwachungsbereich. Es können Roboterbewegungen eingelernt werden, der jeweilige Überwachungsbereich der Sensoren jedoch bleibt unverändert.

Die nachveröffentlichte EP 3 974 936 A1 ermöglicht eine Visualisierung von Sensordaten in einer industriellen Umgebung vorzugsweise durch Überblenden eines Kamerabildes mit Zusatzinformationen (Augmented Reality).

Mit der App PeakFinder kann von einem beliebigen Standort ein künstlich erzeugtes 360°-Panorama der umliegenden Berggipfel samt, Namen und Höhe angezeigt werden. Das basiert auf einem integrierten Höhenmodell, das mit der aktuellen Beobachterperspektive verrechnet wird. Mit Sicherheitstechnik oder Maschinen hat dies nichts zu tun.

Mit den bisherigen Lösungen gibt es somit erhebliche Einschränkungen bei dynamischen Absicherungen von Gefahrenstellen. Es kann immer nur mit erheblichem Aufwand eine begrenzte Anzahl von Prozesspunkten eingelernt werden, und um eine lückenlose Absicherung zu gewährleisten, darf es nur orthogonale Annäherengsbewegungen an eine Fläche geben. Das gilt für alle typischen kollaborativen, robotergesteuerten Tätigkeiten wie Greifen, Fügen, Schrauben und dergleichen.

Es ist daher Aufgabe der Erfindung, die herkömmlichen Lösungen zum Absichern eines beweglichen Maschinenteils zu verbessern.

Diese Aufgabe wird durch ein Verfahren zum Absichern eines beweglichen Maschinenteils einer Maschine sowie ein Absicherungssystem nach Anspruch 1 beziehungsweise 11 gelöst. Die Maschine ist insbesondere ein Roboter oder Roboterarm mit einem Werkzeug, das vornehmlich abzusichern ist (EOAS, End-of-Arm-Safeguarding). Dieses Anwendungsbeispiel eines Roboters wird im Folgenden vielfach stellvertretend verwendet, die Erläuterungen sind jeweils analog auch ein anderes bewegliches Maschinenteil zu übertragen Mit dem Maschinenteil wird mindestens ein berührungsloser Distanzsensor mitbewegt, insbesondere durch Anbringen an dem Maschinenteil in der Nähe oder Umgebung eines Werkzeugs. Auf diese Weise werden längs mehrerer Sichtstrahlen Abstände gemessen, wobei mehrere Sichtstrahlen von demselben Distanzsensor ausgehen, jeweils ein Sichtstrahl von einem von mehreren Distanzsensoren ausgeht oder einund mehrstrahlige Distanzsensoren gemischt verwendet werden. Die gemessenen Abstände werden mit mindestens einer Abstandsschwelle verglichen, und erforderlichenfalls wird eine sicherheitsgerichtete Reaktion der Maschine ausgelöst. Die Distanzsensoren spannen demnach von dem mindestens einen Distanzsensor ausgehend schützende Strahlen einer der Abstandsschwelle entsprechenden Länge auf. Eingriffe in die Sichtstrahlen jenseits der Abstandsschwelle haben ausreichenden Abstand zu dem beweglichen Maschinenteil und sind nicht mehr sicherheitsrelevant.

Die Abstandsschwelle ist vorzugsweise zumindest in einigen Phasen je Sichtstahl unterschiedlich gesetzt, es gibt mit anderen Worten mehrere Abstandsschwellen beziehungsweise auch für eine kontinuierliche Anpassung eine Abstandsschwellenfunktion für die mehreren Sichtstrahlen. Die Abstandsschwelle ist weiterhin anpassbar, wird also während der Bewegung des Maschinenteils verändert, womit sich die Länge der schützenden Strahlen ändert.

Die Erfindung geht von dem Grundgedanken aus, die Anpassung von der Topographie in einer Umgebung der Maschine abhängig zu machen. Diese Umgebung ist eine Arbeitsfläche mit den darauf befindlichen Objekten. Die Topographie wird erfasst, so dass eine 3D-Kontur der Umgebung der Maschine bekannt ist. Die Erfassung erfolgt in verschiedenen noch zu beschreibenden Ausführungsformen mit diversen Mitteln sowie vorab und/oder dynamisch im Betrieb. Auf Basis der Topographie wird ein Maximalabstand bestimmt, wie weit ein jeweiliger Umgebungspunkt oder 3D-Konturpunkt längs des Sichtstrahls von dem Distanzsensor entfernt ist. Der Maximalabstand ist folglich der Abstand zur Umgebung oder Arbeitsfläche aus der Perspektive des Distanzsensors. Die Abstandsschwelle oder Länge des jeweiligen schützenden Strahls wird an diesen Maximalabstand angepasst. Aufgrund der Anpassung wird auch bei Annäherung an einen Umgebungspunkt durch sich verkürzende schützende Strahlen nicht fälschlich die Sicherheitsfunktion ausgelöst, während zugleich gewährleistet ist, dass es keine gefährlichen Eingriffe wegen zu kurzer schützender Strahlen geben kann.

Es handelt sich um ein computerimplementiertes Verfahren, dass beispielsweise in einer eigenen Sicherheitssteuerung abläuft, die an den mindestens einen Distanzsensor und die Maschine angeschlossen ist. Auch eine Implementierung in der Maschinensteuerung oder eine verteilte Implementierung ist denkbar.

Die Erfindung hat den Vorteil, dass eine gattungsgemäße Absicherung wesentlich einfacher zu handhaben ist. Aufwändige Einlernverfahren sind nicht länger erforderlich. Die verbesserte Handhabung betrifft aber nicht nur die Einrichtung, sondern auch den Werker während des Betriebs. Es ist wesentlich weniger Fachwissen über Anwendung und Absicherung beziehungsweise Sicherheitstechnik erforderlich, was den Werker entlastet und mehr Akzeptanz schafft, indem Komplexität versteckt wird. Alle diese Erleichterungen erhöhen auch den Durchsatz und vermeiden Stillstandszeiten.

Die Abstandsschwellen können dank der Kenntnis der Topographie situativ und individuell für jeden schützenden Strahl verändert werden. Die Beschränkung auf eine endliche Anzahl eingelernter Prozesspunkte entfällt. Wegen der flexiblen Anpassung ist eine Umgestaltung der Arbeitsumgebung sehr einfach möglich. Dies betrifft beispielsweise einen Wechsel der Arbeitsfläche, der Endeffektoren und der Werkstücke. Dafür muss lediglich die Topographie neu erfasst werden, und gegebenenfalls sind Parameter für den Endeffektor und die Werkstücke zu aktualisieren, die beispielsweise zur Gewährleistung der Sicherheit einen größeren oder kleineren Mindestabstand erfordern.

Die Sichtstrahlen bilden mit einer der Abstandsschwelle entsprechenden Länge eine Schutzglocke für das bewegliche Maschinenteil. Wie schon erwähnt, bestimmen die Abstandsschwellen die Länge der schützenden Strahlen. Gemeinsam bilden diese schützenden Strahlen vorzugsweise eine virtuelle Schutzglocke oder einen virtuellen Schutzmantel für das bewegliche Maschinenteil, etwa um die Werkzeugspitze an einem Roboterarm. Die Schutzglocke muss nicht zwingend rundum geschlossen sein, etwa wenn von hinten aus mechanischen oder sonstigen Gründen kein Eingriff möglich ist. Anhand des aus der Topographie bestimmten Maximalabstands wird die Länge oder Höhe der Schutzglocke auch lokal angepasst, d.h. vorzugsweise je schützendem Strahl, so dass sie sich gleichsam an die Topographie anschmiegen kann.

Es wird eine Pose des Distanzsensors aus einer Vorwärtskinematik des beweglichen Maschinenteils bestimmt. Vorwärtskinematik ist ein Begriff aus der Robotik, der sich aber auf andere Maschinen übertragen lässt. Es bedeutet die Bestimmung der Pose eines Endeffektors, d.h. der Position und Orientierung in bis zu sechs Freiheitsgraden, ggf. auch weiterer kinematischer Parameter wie Geschwindigkeit und Beschleunigung, aus Informationen über die Gelenke etwa von dort angebrachten Drehgebern. Bei einem Roboter wird die Vorwärtskinematik in aller Regel ohnehin für dessen Arbeitsablauf bestimmt. Diese Information lässt sich nutzen, um die Pose und damit Perspektive des Distanzsensors abzuleiten. Damit lässt sich der jeweilige Sichtstrahl und dessen Schnittpunkt mit der erfassten Topographie und folglich der Maximalabstand für jeden Sichtstrahl bestimmen. Die Vorwärtskinematik ist vorzugsweise sicher bestimmt oder validiert, zumindest während einer Annäherungsbewegung, etwa durch Einsatz sicherer Drehgeber. Es ist aber auch eine Validierung beispielsweise anhand eines die Topographie erfassenden Sensors oder der Distanzsensoren selbst vorstellbar.

Die Topographie wird vorzugsweise vorab erfasst, insbesondere in Form eines 3D-Modells. Dies hat den Vorteil, dass eine Erfassung ohne störende Maschinenbewegungen möglich ist und bei Bedarf auch ein sehr teurer oder aufwändig und nur mit Fachkenntnissen bedienbarer Sensor dafür eingesetzt werden kann, da er nur kurzzeitig benötigt wird. Es ist auch nicht zwingend eine Messung der Topographie erforderlich, es kann auch ein 3D-Modell Grundlage der Erfassung sein, etwa ein CAD-Modell, das für viele Maschinen und auch im Falle einer Roboterzelle oft ohnehin zur Verfügung steht.

Die Topographie wird bevorzugt während des Betriebs der Maschine erfasst. Damit ist eine Anpassung von Abstandsschwellen beziehungsweise einer virtuellen Schutzglocke auch bei sich verändernder Topographie möglich. Eine Voraberfassung der Topographie kann mit einer dynamischen Erfassung kombiniert werden, insbesondere um Veränderungen durch Zufuhr, Entnahme oder Bearbeitung von Werkstücken oder sonstige Einflüsse durch die Arbeit der Maschine zu berücksichtigen.

Die Topographie wird bevorzugt durch mindestens einen Topographiesensor erfasst. Die Technologie für den Topographiesensor ist grundsätzlich nicht beschränkt, die Erfassung kann mittels Ultraschall oder sogar berührend durch Abtasten mit dem Roboterarm erfolgen. Besonders geeignet jedoch ist eine optoelektronische Erfassung durch einen Laserscanner oder eine Kamera, insbesondere eine 3D-Kamera. Letztere wiederum kann mit jedem bekannten Verfahren einschließlich Lichtlaufzeitmessung oder Stereoskopie arbeiten. Die Distanzsensoren können höchstens für eine Voraberfassung der Topographie verwendet werden, indem das Maschinenteil mit den Distanzsensoren bewegt wird. Im Betrieb sind sie für die Absicherung zuständig, es könnte sonst auch nicht zwischen Topographie der Umgebung der Maschine und eingreifendem Objekt unterschieden werden.

Vorzugsweise wird ein Topographiesensor mit dem Maschinenteil mitbewegt. Dadurch nimmt der Topographiesensor eine wechselnde Perspektive ein, die jedenfalls in aller Regel vorteilhaft gerade den relevanten Teil der Umgebung der Maschine erfasst und einer Perspektive der Distanzsensoren entsprechen oder dieser jedenfalls nahekommen kann. Ein mitbewegter Topographiesensor ist beispielsweise eine an dem Maschinenteil montierte Kamera.

Bevorzugt erfasst ein Topographiesensor die Umgebung der Maschine aus einer Au-ßenperspektive. Ein solcher Topographiesensor ist bezüglich des mitbewegten Maschinenteils stationär und nimmt eine Außenperspektive ein. Eine Montage an nicht mitbewegten Maschinenbereichen wäre denkbar.

Es sind Ausführungsformen mit mehreren Topographiesensoren denkbar, die einander ergänzen und so beispielsweise Abschattungen ausgleichen. Dabei sind auch Mischformen vorstellbar, in denen mindestens ein Topographiesensor mitbewegt und mindestens ein Topographiesensor stationär ist.

Anhand der Topographie wird vorzugsweise ein Arbeitsschritt oder Arbeitsergebnis der Maschine gesteuert oder überwacht. Damit können Zusatzfunktionen neben der primären Sicherheitsfunktion realisiert werden. Beispiele sind eine Objekterkennung für das Werkstück, für ein zu greifendes Objekt in Unterstützung der Robotersteuerung insbesondere in einer Bin-Picking-Anwendung oder eine Qualitätsprüfung nach einer Bearbeitung.

Vorzugsweise verbleibt bei ausreichendem Maximalabstand eine Abstandschwelle auf einem voreingestellten Wert. Solange der Maximalabstand groß genug ist, quasi bei Bewegung durch den freien Raum, muss die Absicherung auf die Topographie keine Rücksicht nehmen. Es wird mit schützenden Strahlen beziehungsweise einer Schutzglocke gearbeitet, die für den freien Raum konfiguriert ist und dort die Absicherung leistet. Das Kriterium des ausreichenden Maximalabstands kann insbesondere je Sichtstrahl angewandt werden. Je nach Situation verbleiben dann einige schützende Strahlen bei der vorgegebenen Länge entsprechend dem voreingestellten Wert für den freien Raum, während andere schützende Strahlen wegen zu großer Nähe zu einem Umgebungspunkt der Topographie bereits verkürzt werden.

Vorzugsweise wird ab Unterschreiten des Maximalabstands unter einen Mindestabstand die Abstandschwelle mit sich reduzierendem Maximalabstand verringert. In diesem Fall befindet sich das bewegliche Maschinenteil nicht mehr im freien Raum, sondern nähert sich der Umgebungskontur an, und ein schützender Strahl in voller Länge entsprechend dem voreingestellten Wert hat keinen Platz mehr. Deshalb wird die Abstandschwelle entsprechend angepasst und der schützende Strahl verkürzt, vorzugsweise sukzessive mit fortschreitender Annäherung an die Umgebungskontur. Entsprechend wird der schützende Strahl beim Zurückbewegen und zunehmendem Abstand von der Umgebungskontur wieder verlängert. Ein Verkürzen bei Annäherung und ein Verlängern bei Entfernen erfolgt vorzugsweise mit einer Hysterese. Erneut können alle diese Einstellungen und Anpassungen von Abstandsschwellen mehrere, alle oder nur einzelne Sichtstrahlen betreffen.

Die Position des beweglichen Maschinenteils, in der jeweils erstmals ein Übergang der Abstandsschwelle von dem voreingestellten Wert auf einen angepassten oder reduzierten Wert, kann als Umschaltpunkt aufgefasst werden. Dort beginnt der eigentliche Arbeitsschritt beispielsweise mit Annäherung an ein Werkstück, wobei die Berührungsposition als Arbeitspunkt bezeichnet werden kann. Erfindungsgemäß müssen aber solche Umschaltpunkte und die Abläufe nach diesem Umschaltpunkt hin zu einem Arbeitspunkt und zurück nicht eingelernt werden, da situativ erkannt wird, wann und in welcher Form eine Anpassung von Abstandsschwellen erforderlich wird.

Die Bewegung des Maschinenteils folgt einer bekannten Trajektorie. Ein Umschaltpunkt bezeichnet die Position auf der Trajektorie, an welcher der eigentliche Arbeitsschritt mit Bewegung zu einem Arbeitspunk, an dem das Werkzeug das Werkstück berührt, und anschließend zurück zum selben oder einem anderen Umschaltpunkt erfolgt.

Vorzugsweise werden nach einer Veränderung der Maschine und/oder der Umgebung neue Abstandsschwellen gesetzt. Dies betrifft insbesondere einen Wechsel eines Werkzeugs an dem mitbewegten Maschinenteil, das ein anderes Volumen einnimmt, oder eine Veränderung der zu bearbeitenden Werkstücke.

Der Distanzsensor ist vorzugsweise ein optoelektronischer Sensor, der für eine Messung von Abständen mit einem Lichtlaufzeitverfahren ausgebildet ist. Solche Distanzsensoren können kostengünstig, leicht und kompakt gebaut werden und sind in der Lage, sicherheitsrelevante Eingriffe verlässlich zu erkennen.

Der Distanzsensor ist bevorzugt ein sicherer Sensor und/oder die Funktionsfähigkeit des Distanzsensors wird zyklisch überprüft und/oder die Abstandswerte mehrerer Distanzsensoren zur Erzeugung sicherer Abstandswerte werden untereinander verglichen. Es werden also sichere Abstandswerte gewonnen. Dabei kann der Distanzsensor schon selbst normgerecht ausgebildet sein. Sicherheit kann auch durch mehrere redundante und/oder diversitär redundante Distanzsensoren beziehungsweise zyklische Funktionstests hergestellt werden, oder es wird auf diesem Weg ein höheres Sicherheitsniveau erreicht. Begriffe wie sicher oder Sicherheitssensor sind im Sinne dieser Beschreibung immer so zu verstehen, dass eine Sicherheitsnorm für Anwendungen der Sicherheitstechnik oder zur Unfallvermeidung im industriellen Bereich, insbesondere für Maschinensicherheit, berührungslosen wirkende Schutzeinrichtungen, Industrieroboter, Kollaboration mit Robotern oder dergleichen erfüllt ist. Das können die einleitend genannten Normen oder deren Nachfolger, Erweiterung oder jeweilige Entsprechung in anderen Weltregionen sein.

Vorteilhafterweise ist ein Absicherungssystem für eine Maschine mit einem beweglichen Maschinenteil vorgesehen, wobei das Absicherungssystem mindestens einen berührungslosen Distanzsensor sowie eine Steuer- und Auswertungseinheit zum Ausführen eines erfindungsgemäßen Verfahrens aufweist. Dabei ist die Auswertungsfunktionalität vorzugsweise nicht in dem Distanzsensor selbst implementiert, sondern in einem daran angeschlossenen System wie einer Sicherheitssteuerung oder auch einer nicht sicheren Steuerung oder sonstigen Recheneinheit, die dann durch Redundanz oder Tests abgesichert wird. Auch die Maschinensteuerung kann die Steuer- und Auswertungseinheit aufweisen. Die Implementierung außerhalb des Distanzsensors erleichtert die Aktualisierung und Anpassung an andere Anwendungen, außerdem kann der Distanzsensor auf diese Weise einfacher gehalten werden. Eine in den Distanzsensor integrierte Steuer- und Auswertungseinheit sowie eine über Distanzsensor, angeschlossene Steuerung und/oder Maschinensteuerung verteilte Implementierung ist aber auch denkbar.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer abzusichernden Maschine am Beispiel eines Roboterarms mit daran angebrachten Distanzsensoren, die eine virtuelle Schutzglocke erzeugen;
- Fig. 2: eine Blockdarstellung eines Absicherungssystems mit mindestens einem Distanzsensor;
- Fig. 3: eine Übersichtsdarstellung ähnlich Figur 1 mit mindestens einem Topographiesensor zur Erfassung einer 3D-Kontur der Umgebung der Maschine;
- Fig. 4: eine beispielhafte Topographie oder 3D-Kontur der Umgebung der Maschine mit einer daran angepassten virtuellen Schutzglocke;
- Fig. 5: eine Darstellung eines beweglichen Maschinenteils und eines mitbewegten Distanzsensors in einer Phase mit größerem Maximalabstand zu der 3D-Kontur der Umgebung der Maschine; und
- Fig. 6: eine Darstellung ähnlich Figur 5 nun in einer Phase einer Annäherung an die 3D-Kontur.

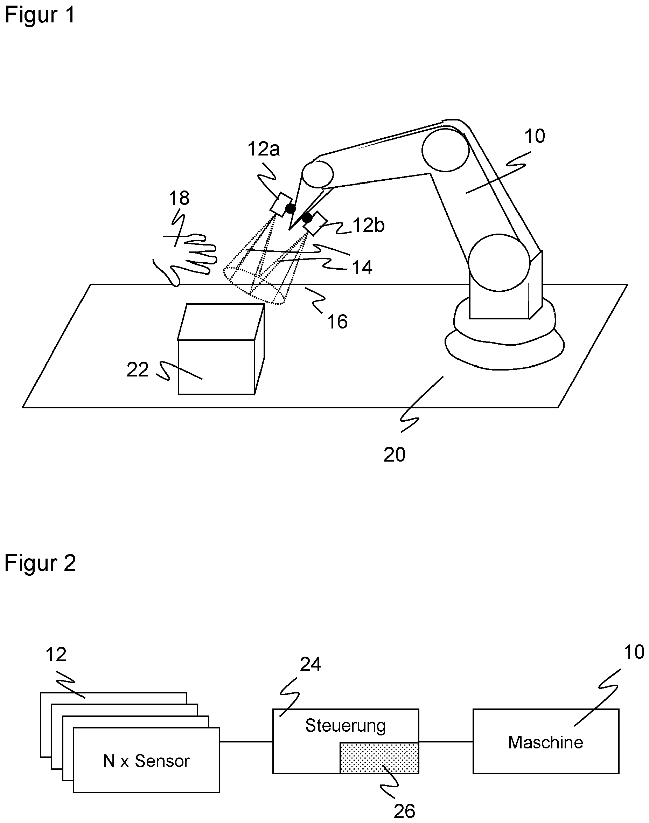

Figur 1 zeigt eine Übersichtsdarstellung eines abzusichernden Roboterarms 10, der in einem "Pick-and-Place"-Szenario mit einer Bedienperson zusammenarbeitet. Der Roboterarm 10 und die spezielle Anwendung sind Beispiele, und die nachfolgenden Erläuterungen sind auf beliebige Roboter und andere abzusichernde bewegte Maschinen und Szenarien übertragbar, insbesondere AGVs/AGCs (Automated Guided Vehicle / Container) oder Drohnen.

Zur Absicherung hier speziell des Endeffektors an dessen Spitze sind an dem Roboterarm 10 Distanzsensoren 12a-b angebracht, vorzugsweise in der Umgebung eines Werkzeugs zu dessen Absicherung (EOAS, End-of-Arm-Safeguarding). Die Distanzsensoren 12a-b bestimmen Abstandswerte längs mehrerer Sichtstrahlen 14. Die gezeigte Anzahl von zwei Distanzsensoren 12a-b ist rein beispielhaft, es können mehr Distanzsensoren oder nur ein Distanzsensor sein, der dann allerdings längs mehrerer Sichtstrahlen 14 messen kann. Allgemein gehen von jedem Distanzsensor 12a-b eine oder mehrere Sichtstrahlen 14 aus. Sichtstrahlen 14 können annähernd geometrische Strahlen sein oder einen endlichen Querschnitt aufweisen, wenn beispielsweise der Distanzsensor 12a-b als Flächentaster mit aufgefächertem Lichtstrahl arbeitet. Als Distanzsensoren 12a-b eignen sich besonders optoelektronische Abstandssensoren beispielsweise mit Messung der Lichtlaufzeit (ToF, Time of Flight). Die einleitend genannte DE 10 2015 112 656 A1 stellt ein derartiges System vor, auf das ergänzend verwiesen wird. Es gibt aber auch andere optoelektronische Sensoren, um Abstände zu bestimmen, wie Laserscanner und 2D- oder 3D-Kameras, ebenso wie ganz andere Technologien, etwa Ultraschallsensoren, kapazitive Sensoren, Radarsensoren und dergleichen.

Während des Betriebs werden die von den Distanzsensoren 12a-b gemessenen Abstandswerte mit Abstandsschwellen verglichen. Je nach Position des Roboterarms 10 auf dessen Bewegungsbahn werden dafür feste, vorgegebene Abstandsschwellen (DSDT, Default Safety Distance Threshold) oder angepasste Abstandsschwellen (ASDT, Application-Specific Distance Threshold) verwendet. Diese Unterscheidung ist aber nicht zwingend. Vorgegebene Abstandsschwellen dienen der Absicherung während einer Bewegung im freien Raum und können als angepasste Abstandsschwellen für solche Betriebsphasen aufgefasst werden. Die Abstandsschwellen definieren einen von dem jeweiligen Distanzsensor 12a-b ausgehenden Abschnitt der Sichtstrahlen 14, der als schützender Strahl bezeichnet werden kann. Die schützenden Strahlen gemeinsam bilden eine Art virtuellen Schutzmantel oder virtuelle Schutzglocke 16 um den Endeffektor.

Greift eine Person beispielsweise mit ihrer Hand 18 in den mittels der Schutzglocke 16 abgesicherten Bereich ein und unterbricht damit einen der Sichtstrahlen 14 in einem kürzeren Abstand als die zugehörige Abstandsschwelle, so wird die Schutzglocke 16 als verletzt angesehen. Deshalb wird eine sicherheitsgerichtete Reaktion des Roboters 10 ausgelöst, die abhängig von den verletzten Abstandsschwellen in einem Verlangsamen, Ausweichen oder einem Nothalt bestehen kann.

Wie schon erwähnt, sind die Abstandsschwellen während einer Bewegung des Roboterarms 10 im Freiraum vorzugsweise auf einen vorgegebenen festen Wert gesetzt. Die Schutzglocke 16 hat damit eine feste Ausdehnung. Nähert sich der Endeffektor aber einer Arbeitsfläche 20 oder einem Objekt 22 an, so würde quasi die Schutzglocke 16 anstoßen und fehlerhaft die Sicherheitsfunktion auslösen. Deshalb werden die Abstandsschwellen in solchen Phasen der Annährung sukzessive reduziert und bei der anschließenden Rückwärtsbewegung wieder verlängert.

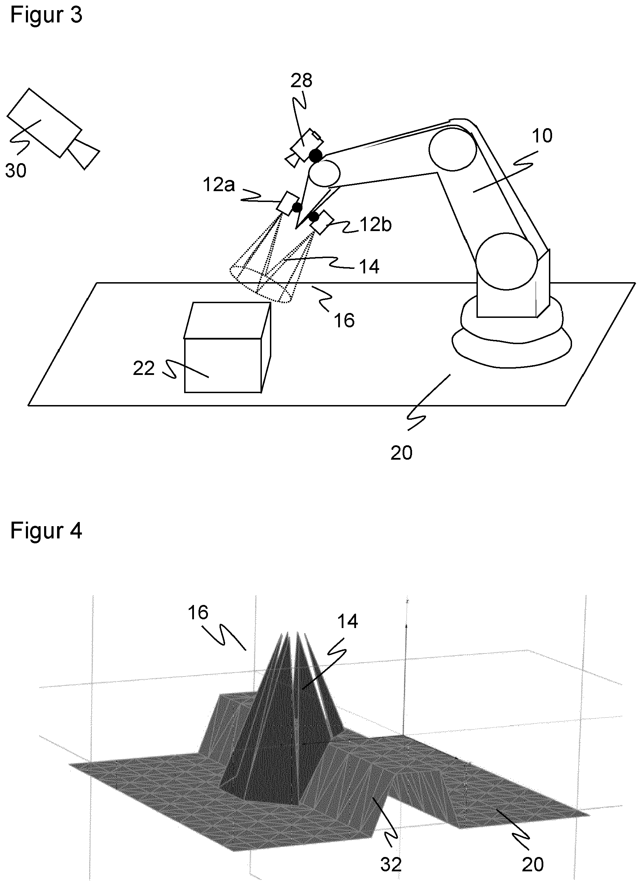

Herkömmlich wird der Übergang zu der Annäherungsbewegung oder dem eigentlichen Arbeitsschritt als Umschaltpunkt definiert, und die sich verändernden Abstandsschwellen für die folgende Phase der Bewegung in einen Arbeitspunkt mit Interaktion zwischen Roboterarm 10 und einem zu bearbeitenden Objekt 22 müssen vorab eingelernt werden. Ferner ist im bisherigen Stand der Technik in diese Phase nur eine Bewegung senkrecht zu der Arbeitsfläche 20 erlaubt, um Schutzlücken zu vermeiden. Erfindungsgemäß werden stattdessen die Abstandsschwellen situativ anhand der Topographie angepasst, also der durch Arbeitsfläche 20 und Objekt 22 oder allgemein die Umgebung des Roboterarms 10 gebildete 3D-Kontur, ohne ein vorheriges Einlernen, die Restriktion auf eine endliche Anzahl festgelegter Umschaltpunkte oder eine nur senkrechte Arbeitsbewegung. Diese situative Anpassung von Abstandsschwellen an die Topographie wird später unter Bezugnahme auf die Figuren 3 bis 6 näher erläutert.

Figur 2 zeigt eine Blockdarstellung eines erfindungsgemäßen Absicherungssystems, wobei nun der Roboterarm wie schon als Möglichkeit erwähnt zu einer Maschine 10 verallgemeinert ist. Ein oder mehrere Distanzsensoren 12 sind wie in Figur 1 gezeigt mit dem abzusichernden Maschinenteil mitbewegt, um es gegen Eingriffe abzusichern und so Unfälle und Verletzungen zu vermeiden. Bei den Distanzsensoren 12 handelt es sich vorzugsweise um optoelektronische Sensoren nach dem Lichtlaufzeitprinzip, aber auch andere gleichartige oder gemischt verwendete Sensoren aus den oben angeführten Beispielen sind denkbar.

Die Abstandswerte werden an eine Steuerung 24 weitergegeben, innerhalb derer ein Funktionsblock 26 für die hier betrachteten Sicherheitsauswertungen zuständig ist und die erforderlichenfalls ein sicheres Signal an die Maschine 10 beziehungsweise deren Steuerung ausgibt, um eine Sicherheitsreaktion auszulösen. Prinzipiell könnten die Sicherheitsauswertungen auch in einem der Distanzsensoren 12 untergebracht sein, aber die Flexibilität in einer Steuerung 24 ist größer. Der Funktionsblock 26 kann als solcher, aber auch als Softwarepaket, App oder in jeder sonst geeigneten Form implementiert sein. Die Steuerung 24 ist vorzugsweise eine Sicherheitssteuerung, alternativ kommt aber auch eine andere Hardware in Betracht, wie ein Mikrocontroller, ein Computer, ein PLC (programmable logic controller), die Roboter- oder Maschinensteuerung, eine Edge-Computing-Infrastruktur oder eine Cloud. Auch hinsichtlich der Kommunikationsverbindungen besteht eine große Auswahl, etwa I/O-Link, Bluetooth, WLAN, Wi-Fi, 3G/4G/5G und prinzipiell jeglicher industrietaugliche Standard.

Die Distanzsensoren 12 und die Steuerung 24, zumindest soweit es den Funktionsblock 26 betrifft, müssen eine sichere Erfassung und Auswertung im Sinne der einschlägigen Normen leisten. Ein Weg dafür ist, dass sichere Sensoren und eine Sicherheitssteuerung eingesetzt werden. Es ist aber auch denkbar, originär nicht sichere Hardware zu verwenden und das geforderte Sicherheitsniveau durch Redundanz, auch diversitäre Redundanz, beziehungsweise Plausibilitätschecks oder zyklische Tests zu erreichen.

Figur 3 zeigt eine Übersichtsdarstellung ähnlich Figur 1, jedoch mit mindestens einem zusätzlichen Topographiesensor zur Erfassung der Topographie in der Umgebung des Roboterarms 10, also insbesondere der durch Arbeitsfläche 20 und Objekte 22 auf der Arbeitsfläche 20 gebildeten 3D-Kontur beziehungsweise der relevanten Teile davon. Es gibt zahlreiche Möglichkeiten, die Topographie vorab und/oder dynamisch während des Betriebs zu erfassen.

In dem gezeigten Beispiel werden eine mitbewegte Kamera 28 und eine externe Kamera 30 als Topographiesensoren verwendet. Die mitbewegte Kamera 28 ist der Übersichtlichkeit halber nicht an der Spitze des Roboterarms 10 angebracht, sondern an einem Gelenk davor. Das ist eine mögliche Ausführungsform, vorzugsweise ist eine mitbewegte Kamera 28 jedoch direkt am Endeffektor montiert. Das ist insbesondere durch Integration eines Kameramoduls in die Anordnung der Distanzsensoren 12a-b möglich, wie dies beispielsweise in der einleitend genannten DE 10 2018 113 362 A1 beschrieben wird, wobei dort das Kameramodul an der Sicherheitsfunktion unbeteiligt ist.

Die externe Kamera 30 beobachtet den Roboterarm 10 und dessen Umgebung vorzugsweise stationär aus einer festen Außenperspektive. Es wäre auch möglich, die externe Kamera 30 zu bewegen und die Topographie so sukzessive zu erfassen. Denn durch die Zentralperspektive der externen Kamera 30 kann es zur Abschattungen kommen, und die Topographie wird aus nur einer Außenperspektive unvollständig erfasst. Derartige Lücken können durch Inter- beziehungsweise Extrapolation oder durch frühere Erfassungen plausibel gefüllt werden. Soweit der Roboterarm 10 selbst Ursache der Abschattung ist, kann er zumindest bei einer Voraberfassung der Topographie bewegt werden, um jeweils andere Bereiche abzuschatten und freizugeben.

Die Erfassung mit genau einer mitbewegten Kamera 28 und einer externen Kamera 30 ist nur ein Beispiel. Es kann eine dabei den Kameras 28, 30 weggelassen werden, oder es können zusätzliche mitbewegte und/oder externe Kameras eingesetzt werden. Durch Fusion kann dann trotz Abschattungen eine vollständige Topographie erhalten werden. Insbesondere eignet sich eine mitbewegte Kamera 28 dazu, in den besonders relevanten Bereichen im Sichtfeld der Distanzsensoren 12a-b die Topographie zu erfassen oder zu aktualisieren. Für eine optimierte Rechenzeit genügt es, eine dynamische Erfassung der Topographie auf die relevanten Areale der Tiefenkarte zu beschränken, die nach heuristischen Überlegungen tatsächlich in einer Verlängerung der Schutzglocke 16 liegen können.

Kameras 28, 30 und insbesondere 3D-Kameras wie Lichtlaufzeitkameras sind besonders geeignet, die Topographie zu erfassen. Durch Relativbewegung zwischen Kamera 28, 30 und Arbeitsfläche 20 sowie geeignete 3D-Verfahren wie Stereoskopie oder dergleichen kann eine Erfassung mit 2D-Kameras genügen. Eine Kamera 28, 30 kann auch Zusatzfunktionen erfüllen, die nicht mit der primären Sicherheitsfunktion zusammenhängen, etwa eine Qualitätskontrolle zugeführter oder bearbeiteter Werkstücke, eine Füllstandsmessung in Behältern oder eine Objekterfassung als Assistenzfunktion für ein Greifen (Bin-Picking). Trotz dieser Vorteile einer Kamera 28, 30 sind auch andere optische und nicht optische Sensoren einsetzbar, um eine 3D-Kontur zu erfassen, beispielsweise Laserscanner oder Ultraschallsensoren.

Die Montagepositionen der Topographiesensoren kann durch eine Simulation optimiert werden. Zielfunktion könnte das Minimieren der Abschattung und das Erzielen möglichst dichter Tiefenkarten insbesondere in den für die Bestimmung von Abstandsschwellen relevanten Bereichen sein. Allgemein sollten die Art, Anzahl und Pose der Topographiesensoren und die Bewegungen des Roboterarms 10 aufeinander abgestimmt sein und bevorzugt für einander optimiert sein, um eine gute Balance aus Sicherheit und Verfügbarkeit zu erhalten.

Figur 4 eine beispielhafte Topographie oder 3D-Kontur der Umgebung des Roboterarms 10 mit einer daran angepassten virtuellen Schutzglocke 16. Die Topographie ist durch die Arbeitsfläche 20 und darauf befindliche Objekte 22 bestimmt, wobei hier beispielhaft für beliebige 3D-Konturen eine Erhebung 32 gezeigt ist. Die Schutzglocke 16 ist in diesem Beispiel durch schützende Flächen illustriert, die sich aber als Sichtstrahlen 14 mit besonderem Querschnitt auffassen beziehungsweise auch durch geometrische Strahlen abrastern lassen. Die Topographie ist durch Vorabvermessung und/oder laufende Vermessung mit mindestens einem Topographiesensor entsprechend der Figur 3 oder auf andere Weise bekannt, beispielsweise aus einem 3D- oder CAD-Modell der Roboterzelle des Roboterarms 10.

Die Egoperspektive der Distanzsensoren 12a-b bezüglich dieser Topographie lässt sich aus der Vorwärtskinematik des Roboterarms 10 bestimmen. Die entsprechenden Informationen werden beispielsweise von einer Robotersteuerung des Roboterarms 10 übergeben. Vorzugsweise ist die Vorwärtskinematik auf sichere Weise bestimmt oder durch Tests und Vergleich mit anderen Erfassungen validiert. Mit der Egoperspektive der Distanzsensoren 12a-b sind auch Startpunkt und Richtung der Sichtstrahlen 14 bekannt, somit die gesamte Raumlage der Schutzglocke 16. Es lässt sich dann berechnen, in welchem Abstand ein jeweiliger Sichtstrahl 14 die Topographie schneidet, somit der zur Verfügung stehende Maximalabstand zwischen Distanzsensor 12a-b und Arbeitsumgebung.

Anhand dieses Maximalabstands werden nun die Abstandsschwellen angepasst, die eine Länge der schützenden Strahlen und damit der Schutzglocke 16 festlegen. Diese Berechnungen erfolgen vorzugsweise in Echtzeit in der Steuerung 24. Der Roboterarm 10 kann sich mit den angepassten Abstandsschwellen aus beliebigen Raumrichtungen an eine Oberfläche annähern, während die Schutzglocke 16 stets ausreichend geschlossen bleibt und ein gefährliches Eingreifen verhindert. Eingelernt oder auf eine endliche Anzahl von Umschaltpunkt in bezogen ist diese Anpassung im Gegensatz zum Stand der Technik nicht mehr.

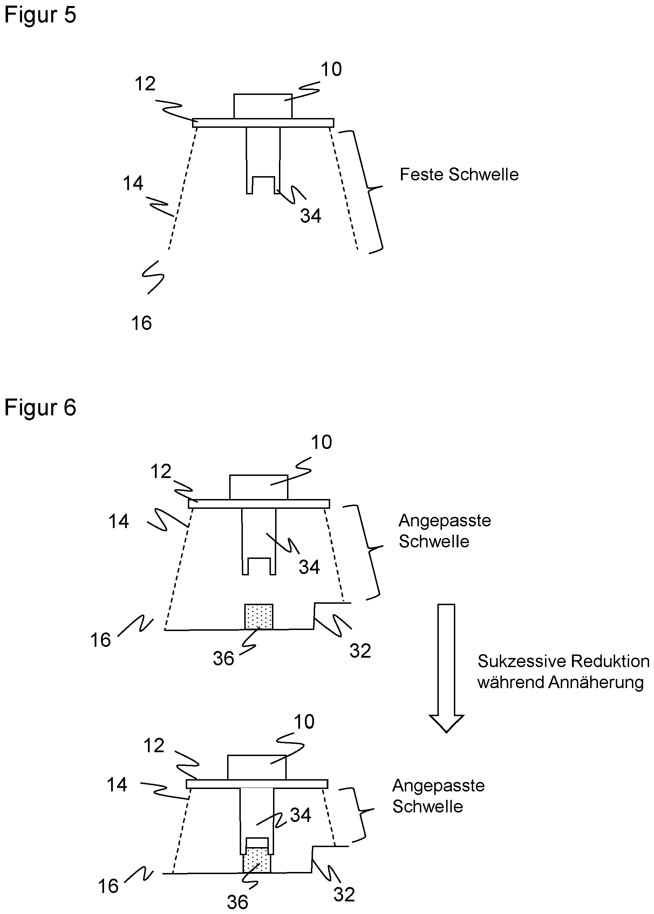

Vorzugsweise werden bei der Anpassung zwei Fälle unterschieden. Solange der Maximalabstand noch ausreicht, bleiben die Abstandsschwellen auf einen festen Wert für die Bewegung im freien Raum eingestellt. Diese Situation ist in Figur 5 dargestellt. Eine Werkzeugspitze 34 des Roboterarms ist von einer Schutzglocke 16 aus Sichtstrahlen 14 gebildet, die bis zu einer festen Abstandsschwelle überwacht werden. Diese Abstandsschwelle ist anhand von Parametern wie der Geometrie der Werkzeugspitze 34, der Bewegungsgeschwindigkeiten und des Bremswegs festgelegt. In dieser Phase der Bewegung des Roboterarms 10 werden keinerlei Objekte in der Schutzglocke 16 erwartet, und auf eine Verletzung wird dementsprechend sicherheitsgerichtet reagiert.

Wird der Maximalabstand dagegen unterschritten, so kann nicht länger mit der festen Abstandsschwelle gearbeitet werden, da sonst die Umgebungskontur die Sicherheitsfunktion auslösen würde. Diese Situation ist in Figur 6 im oberen Teil kurz nach Unterschreiten des Maximalabstands und im unteren Teil später bei Interaktion mit einem Werkstück 36 gezeigt. Die angepasste Abstandsschwelle verkürzt den zugehörigen schützenden Strahl und damit die Schutzglocke 16. Diese Anpassung erfolgt vorzugsweise individuell je Sichtstrahl 14, damit sich die Schutzglocke 16 wie in Figur 6 und auch in Figur 4 gezeigt an die Topographie anschmiegt. Wegen der individuellen Anpassung können durchaus einzelne oder mehrere der Abstandsschwellen weiterhin auf den festen Wert für Bewegung im freien Raum gesetzt bleiben. In der entsprechenden Richtung ist die Schutzglocke 16 dann noch nicht verkürzt. Verletzungen der angepassten Schutzglocke 16 sind nicht auf die Umgebungskontur zurückzuführen und führen deshalb zu einer sicherheitsgerichteten Reaktion. Die Kommunikation von Abstandsschwellen wird vorzugsweise abgesichert, beispielsweise mit einer Prüfsumme (CRC).

Wie die festen Annäherungsschwellen gesetzt und dann dynamisch angepasst werden, kann von zahlreichen Randbedingungen abhängen. Dazu zählen der verwendete Endeffektor beziehungsweise die Werkzeugspitze 34 und das Werkstück 36, Messgenauigkeit, Remission und Sensorhysterese, die sich teilweise auch situativ verändern. Speziell die Messgenauigkeit kann simulativ berücksichtigt und dafür zwischen einstrahligem Taster und Flächentaster unterschieden werden, wobei für den Flächentaster beispielsweise ein durchschnittlicher Entfernungswert errechnet wird.

Es ist denkbar, einen Unterschied in den Abstandsschwellen je nach Ausrichtung der schützenden Strahlen vorzugsehen. Einige schützende Strahlen sind dem Roboterarm 10 zugewandt, andere abgewandt, und dies kann unterschiedlich restriktiv behandelt werden. Insbesondere kann durch deutlich restriktivere Parametrierung der dem Roboterarm 10 zugewandten schützenden Strahlen eine Art Hintergreifschutz in Analogie zu einem in Sicherheitsanwendungen bekannten Hintertretschutz realisiert werden.

Statt diskreter Abstandsschwellen und einem sicherheitsgerichteten Verlangsamen oder Anhalten bei Eingriff in die dadurch definierten schützenden Strahlen ist auch ein kontinuierliches Anpassen der Robotergeschwindigkeit denkbar. Dabei ist immer die kürzeste gemessene Distanz führend.

Aus der Vorwärtskinematik ist zunächst nur die Position des Endeffektors selbst bekannt. Die einzelnen Distanzsensoren 12a-b haben dazu einen individuellen Versatz in Position und Orientierung, der für noch präziser bestimmte Abstandsschwellen berücksichtigt werden kann. Die entsprechenden Informationen können beispielsweise während einer Kalibrationsfahrt des Roboterarms 10 ermittelt werden. Es ist auch möglich, diesen individuellen Versatz in zumindest einigen der sechs Freiheitsgraden der Pose eines Distanzsensors 12a-b einmalig oder sogar situativ zu verändern, um dadurch eine Schutzglocke 16 noch flexibler auch in ihrer Form beziehungsweise ihrem Durchmesser und/oder Öffnungswinkel anzupassen. Umsetzungsmöglichkeiten sind in der einleitend schon genannten noch unveröffentlichten europäischen Patentanmeldung mit dem Aktenzeichen EP19176696.3 beschrieben.

Zu den möglichen Anwendungen zählen das barrierefreie und sichere Greifen von Objekten insbesondere aus einem Behälter (Bin-Picking) und zahlreiche weitere dynamische und zum Teil hochkomplexe Anwendungen mit Kooperation zwischen Mensch und Maschine (MRK, Mensch-Roboter-Kollaboration), wie Schrauben, Bohren, Fügen oder Entgraten.

Das Entgraten eines fest eingespannten Werkstücks ist ein Beispiel für einen deterministischen Anwendungsfall. Die Szene und damit die Topographie bleibt unverändert und kann lediglich einmalig erfasst werden, auch vorab oder aus einem 3D-Modell. Auch der Arbeitsablauf ist fest, so dass die Abstandsschwellen im Prinzip auch vorab berechnet werden können und damit eine virtuelle Inbetriebnahme und Parametrierung der Anwendung denkbar wird.

Bin-Picking ist eine Art semideterministischer Fall. Grundlegend ändern sich Szene und Arbeitsablauf nicht, aber die Szene muss spätestens nach Entnahme eines Objekts neu erfasst werden, auch um das nächste zu greifende Objekt zu finden. Dies ist Aufgabe von Optimierungsalgorithmen, und die Absicherung kann in diese Optimierung einbezogen werden, indem beispielsweise Prozesspunkte so gewählt werden, dass sich dies optimal mit der Absicherung verträgt.

Ein Wechsel des Endeffektors beziehungsweise Werkzeugs 34 und/oder des Werkstücks 36 lässt sich durch einen entsprechenden Parametersatz realisieren, der in die Erfassung der Topologie und die Bestimmung der Abstandsschwellen eingeht.

## Patentansprüche

1. Verfahren zum Absichern eines beweglichen Maschinenteils (10) einer Maschine, insbesondere eines Roboterarms, wobei von mindestens einem mit dem Maschinenteil (10) mitbewegten berührungslosen Distanzsensor (12a-b) längs mehrerer Sichtstrahlen (14) je ein Abstandswert gemessen wird und die gemessenen Abstandswerte mit mindestens einer anpassbaren Abstandsschwelle verglichen werden, um zu entscheiden, ob eine sicherheitsgerichtete Reaktion der Maschine eingeleitet wird, wobei die Sichtstrahlen (14) mit einer der Abstandsschwelle entsprechenden Länge eine Schutzglocke (16) für das bewegliche Maschinenteil bilden,
**dadurch gekennzeichnet,**
**dass** eine Pose des Distanzsensors (12a-b) aus einer Vorwärtskinematik des beweglichen Maschinenteils (10) bestimmt wird, dass die Topographie einer Umgebung (20, 22, 32) der Maschine, d.h. eine durch eine Arbeitsfläche (20) und Objekte (22) auf der Arbeitsfläche (20) gebildete 3D-Kontur, durch Vorabvermessung und/oder Vermessung während des Betriebs mit mindestens einem Topographiesensor (28, 30) erfasst wird oder als 3D-Modell, insbesondere CAD-Modell bekannt ist, dass für die Sichtstrahlen (14) rechnerisch anhand der Topographie ein jeweiliger Maximalabstand zu der Umgebung (20, 22, 32) bestimmt wird und dass eine Anpassung der mindestens einen Abstandsschwelle anhand des Maximalabstands erfolgt.

2. Verfahren nach Anspruch 1,
wobei der Topographiesensor (28, 30) eine Kamera ist.

3. Verfahren nach Anspruch 1 oder 2,
wobei ein Topographiesensor (28) mit dem Maschinenteil (10) mitbewegt wird oder ein Topographiesensor (30) die Umgebung der Maschine aus einer Au-ßenperspektive erfasst.

4. Verfahren nach Anspruch 1 oder 2,
wobei ein Topographiesensor (28) mit dem Maschinenteil (10) mitbewegt wird und ein Topographiesensor (30) die Umgebung der Maschine aus einer Außenperspektive erfasst.

5. Verfahren nach einem der vorhergehenden Ansprüche,
wobei anhand der Topographie ein Arbeitsschritt oder Arbeitsergebnis der Maschine gesteuert oder überwacht wird.

6. Verfahren nach einem der vorhergehenden Ansprüche,
wobei, insbesondere je Sichtstrahl (14), bei ausreichendem Maximalabstand eine Abstandschwelle auf einem voreingestellten Wert verbleibt.

7. Verfahren nach einem der vorhergehenden Ansprüche,
wobei, insbesondere je Sichtstrahl (14), ab Unterschreiten des Maximalabstands unter einen Mindestabstand die Abstandschwelle mit sich reduzierendem Maximalabstand verringert wird.

8. Verfahren nach einem der vorhergehenden Ansprüche,
wobei nach einer Veränderung der Maschine und/oder der Umgebung (20, 22, 32) neue Abstandsschwellen gesetzt werden.

9. Verfahren nach einem der vorhergehenden Ansprüche,
wobei der Distanzsensor (12a-b) ein optoelektronischer Sensor ist, der für eine Messung von Abständen mit einem Lichtlaufzeitverfahren ausgebildet ist.

10. Verfahren nach einem der vorhergehenden Ansprüche,
wobei der Distanzsensor (12a-b) ein sicherer Sensor ist und/oder wobei die Funktionsfähigkeit des Distanzsensors (12a-b) zyklisch überprüft wird und/oder wobei die Abstandswerte mehrerer Distanzsensoren (12a-b) zur Erzeugung sicherer Abstandswerte untereinander verglichen werden.

11. Absicherungssystem (12a-b, 24, 26) für eine Maschine mit einem beweglichen Maschinenteil (10), insbesondere einen Roboterarm, wobei das Absicherungssystem mindestens einen berührungslosen Distanzsensor (12a) sowie eine Steuer- und Auswertungseinheit (24) aufweist,
**dadurch gekennzeichnet,**
**dass** die Steuer- und Auswertungseinheit (24) zum Ausführen eines Verfahrens nach einem der vorhergehenden Ansprüche ausgebildet ist.

## Claims

1. A method for protecting a movable machine part (10) of a machine, in particular a robot arm, wherein a respective distance value is measured along a plurality of visual beams (14) by at least one contactless distance sensor (12a-b) that is moved along with the machine part (10), and the measured distance values are compared with at least one adjustable distance threshold in order to decide whether a safety-related reaction of the machine is initiated, wherein the visual beams (14) of a length corresponding to the distance threshold form a protective bell (16) for the movable machine part,
**characterized in that** a pose of the distance sensor (12a-b) is determined from a forward kinematics of the movable machine part (10), **in that** the topography of an environment (20, 22, 32) of the machine, i.e. a 3D contour formed by a working surface (20) and objects (22) on the working surface (20), is detected by an earlier measurement and/or a measurement during operation with at least one topography sensor (28, 30) or is known as a 3D model, in particular CAD model, **in that** a respective maximum distance to the environment (20, 22, 32) is determined for the visual beams (14) by calculation on the basis of the topography, and **in that** an adaptation of the at least one distance threshold is done on the basis of the maximum distance.

2. The method according to claim 1,
wherein the topography sensor (28, 30) is a camera.

3. The method according to claim 1 or 2,
wherein a topography sensor (28) is moved along with the machine part (10) or a topography sensor (30) detects the environment of the machine from an external perspective.

4. The method according to claim 1 or 2,
wherein a topography sensor (28) is moved along with the machine part (10) and a topography sensor (30) detects the surroundings of the machine from an external perspective.

5. The method according to any of the preceding claims,
wherein a work step or work result of the machine is controlled or monitored based on the topography.

6. The method according to any of the preceding claims,
wherein, in particular per visual beam (14), a distance threshold remains at a preset value if the maximum distance is sufficient.

7. The method according to any of the preceding claims,
wherein, in particular for each visual beam (14), the distance threshold is reduced as the maximum distance falls below a minimum distance.

8. The method according to any of the preceding claims,
wherein new distance thresholds are set after a change of the machine and/or the environment (20, 22, 32).

9. The method according to any of the preceding claims,
wherein the distance sensor (12a-b) is an optoelectronic sensor configured to measure distances using a light time-of-flight method.

10. The method according to any of the preceding claims,
wherein the distance sensor (12a-b) is a safe sensor and/or wherein the operability of the distance sensor (12a-b) is cyclically checked and/or wherein the distance values of a plurality of distance sensors (12a-b) are compared with one another to generate safe distance values.

11. A safeguarding system (12a-b, 24, 26) for a machine having a movable machine part (10), in particular a robot arm, the safeguarding system having at least one non-contact distance sensor (12a) and a control and evaluation unit (24),
**characterized in that** the control and evaluation unit (24) is configured to carry out a method according to any of the preceding claims.

## Revendications

1. Procédé de protection d'un élément de machine mobile (10), en particulier d'un bras de robot, dans lequel une valeur de distance est mesurée respectivement le long de plusieurs faisceaux de vision (14) par au moins un capteur de distance sans contact (12a- b) se déplaçant avec l'élément de machine (10), et les valeurs de distance mesurées sont comparées à au moins un seuil de distance adaptable afin de décider si une réaction liée à la sécurité de la machine est déclenchée, dans lequel les faisceaux de vision (14) d'une longueur correspondant au seuil de distance forment une cloche de protection (16) pour l'élément mobile de la machine,
**caractérisé en ce qu'**une pose du capteur de distance (12a- b) est déterminée à partir d'une cinématique vers l'avant de l'élément mobile de la machine (10), **en ce que** la topographie d'un environnement (20, 22, 32) de la machine, c'est-à-dire un contour 3D formé par une surface de travail (20) et des objets (22) sur la surface de travail (20), est détectée par une mesure préalable et/ou une mesure pendant le fonctionnement avec au moins un capteur de topographie (28, 30) ou est connue comme modèle 3D, en particulier un modèle CAO, **en ce qu'**une distance maximale respective par rapport à l'environnement (20, 22, 32) est déterminée par calcul pour les faisceaux de vision (14) à l'aide de la topographie, et **en ce qu'**une adaptation d'au moins un seuil de distance est effectuée à l'aide de la distance maximale.

2. Procédé selon la revendication 1,
dans lequel le capteur de topographie (28, 30) est une caméra.

3. Procédé selon la revendication 1 ou 2,
dans lequel un capteur de topographie (28) est déplacé avec l'élément de la machine (10) ou un capteur de topographie (30) détecte l'environnement de la machine d'une perspective extérieure.

4. Procédé selon la revendication 1 ou 2, dans lequel un capteur de topographie (28) est déplacé avec l'élément de la machine (10) et un capteur de topographie (30) détecte l'environnement de la machine d'une perspective extérieure.

5. Procédé selon l'une des revendications précédentes,
dans lequel une étape de travail ou un résultat de travail de la machine est commandé ou surveillé à l'aide de la topographie.

6. Procédé selon l'une des revendications précédentes,
dans lequel, en particulier par faisceau de vision (14), un seuil de distance reste à une valeur prédéfinie lorsque la distance maximale est suffisante.

7. Procédé selon l'une des revendications précédentes,
dans lequel, en particulier par faisceau de vision (14), à partir du moment où la distance maximale est inférieure à une distance minimale, le seuil de distance est réduit lorsque la distance maximale diminue.

8. Procédé selon l'une des revendications précédentes,
dans lequel après une modification de la machine et/ou de l'environnement (20, 22, 32), des nouveaux seuils de distance sont établis

9. Procédé selon l'une des revendications précédentes,
dans lequel le capteur de distance (12a- b) est un capteur optoélectronique configuré pour mesurer des distances par un procédé de temps de vol de la lumière.

10. Procédé selon l'une des revendications précédentes,
dans lequel le capteur de distance (12a- b) est un capteur sûr et/ou dans lequel la capacité de fonctionnement du capteur de distance (12a- b) est vérifiée de manière cyclique et/ou dans lequel les valeurs de distance de plusieurs capteurs de distance (12a- b) sont comparées les unes aux autres pour générer des valeurs de distance sûres.

11. Système de sécurité (12a- b, 24, 26) pour une machine avec un élément de machine mobile (10), en particulier d'un bras de robot, dans lequel le système de sécurité comporte au moins un capteur de distance sans contact (12a) ainsi qu'une unité de commande et d'évaluation (24),
**caractérisé en ce que** l'unité de commande et d'évaluation (24) est configurée pour exécuter un procédé selon l'une des revendications précédentes.
